# EUROPEAN PATENT APPLICATION

(11) **EP 2 365 692 A2**
(43) Date of publication of application: **14.09.2011**
(21) Application number: 11150441.1
(22) Date of filing: 10.01.2011
(51) Int. Cl.: H04N 5/445

(54) **Content reproducing apparatus and control method thereof**

(30) Priority: 19.02.2010 KR 20100014965
(71) Applicant: Samsung Electronics Co., Ltd., Suwon-si, Gyeonggi-do 442-742 (KR)
(72) Inventor: Oh, Sung Bo, Gyeonggi-do (KR); Lee, Tae Hee, Gyeonggi-do (KR); Han, Hong Gyu, Gyeonggi-do (KR); Cho, Song Ki, Gyeonggi-do (KR); Lee, Ho Shin, Gyeonggi-do (KR); Jin, Se Min, Gyeonggi-do (KR); Kwak, Yu Whan, Busan (KR)
(74) Representative: Grootscholten, Johannes A.M.

(57) **Abstract**

Disclosed herein are a content reproducing apparatus to display a content image and a menu image on a display device, and a control method thereof. The menu image is generated based on a support capability of the display device. Therefore, when the content image and the menu image are alternately displayed, screen flickering may be prevented from occurring due to a change in image format. Also, a support capability of each constituent element may be notified to the user as guide information, and the content image may be output after user confirmation.

## Description

### 1. Field

Exemplary embodiments of the present invention relate to a content reproducing apparatus to display a content image and a menu image on a display device, and a control method thereof.

### 2. Description of the Related Art

Various efforts have been made to provide stereoscopic images. One such effort may be a method to impart a cubic effect to a three-dimensional (3D) image using a binocular parallax.

3D content may be recorded on an optical recording medium capable of storing high-capacity data, and a reproduction device may be used to read the 3D content from the optical recording medium and output the read 3D content to a display device, such as a digital television (DTV) or monitor. A receiver may be connected between the reproduction device and the display device to provide a high-quality image and high-quality audio.

A scheme in which the reproduction device is directly connected to the display device or a scheme in which the reproduction device is connected to the display device via the receiver has been applied to a content reproducing apparatus.

Menu information is displayed on the display device to allow the user to select and adjust various functions in association with content reproduction. A menu image may include icons of various shapes, as well as text that notify the user of information. Icons to search content information, such as the title, storage capacity and reproduction time of content, and icons to edit the content, etc. may be provided, and the user may easily use the content through a user interface that enables the user to select a desired icon.

Menu information may be created in the form of a two-dimensional (2D) image and provided from the reproduction device to the display device, differently from a 3D content that is created in the form of a 3D image. When a 3D content image and a 2D menu image are alternately displayed, screen flickering may occur due to a change in image format. For example, when a television supporting a 3D image displays a 2D menu image, the screen of the television may flicker temporarily until the television recognizes the format of the menu image and displays the menu image. This may distract the user and degrade product reliability.

There may be differences among content support capabilities of respective televisions or receivers. Provided that a state in which a 3D content is transmitted or cannot be processed is confirmed, and then provided to the user when a television is connected to a reproduction device directly or via a receiver, convenience in use may be increased. That is, content support capabilities of constituent elements of each content reproducing apparatus may be notified to the user, thereby reducing the frequency of inappropriate selection by the user in use of content.

### SUMMARY

An aspect of the present invention may provide a content reproducing apparatus including: a display device to display a menu image related to content; and a reproduction device to output a new menu image supported by the display device when the menu image cannot be displayed by the display device.

The content reproducing apparatus may further include a receiver connected between the display device and the reproduction device, wherein the reproduction device provides the new menu image to the display device through the receiver.

If the display device is capable of displaying three-dimensional (3D) images and a request from a user to output the menu image is received, the reproduction device may generate a 3D menu image using a two-dimensional (2D) menu image and outputs the generated 3D menu image to the display device.

The reproduction device may include: a memory to store the 2D menu image; and a controller to control an operation to generate the 3D menu image from the 2D menu image.

The reproduction device may further include: a decoder to decode the 3D menu image; a 3D formatter to convert a format of the decoded 3D menu image into a 3D format; and a high-definition multimedia interface (HDMI) transmitter to output the menu image in the 3D format.

The controller may generate the 3D menu image based on a left (L) menu image and a right (R) menu image, wherein the L menu image and the R menu image are generated by copying the 2D menu image.

The controller may respectively shift a left (L) menu image and a right (R) menu image, which are generated by copying the 2D menu image, wherein the L menu image and the R menu image are shifted in an X-axis direction and wherein the controller may further generate the 3D menu image based on the X-shifted L menu image and the X-shifted R menu image.

The controller may provide a left (L) menu image, which is generated by copying the 2D menu image, and L menu image depth information about each pixel of the L menu image to the display device, wherein the display device may generate a right (R) menu image based on the L menu image and the L menu image depth information and may further generate the 3D menu image based on the L menu image and the R menu image.

The L menu image depth information may include an X coordinate and a Y coordinate of each pixel of the L menu image, wherein the display device may set X and Y coordinates with respect to at least one of an icon and a text item of the L menu image and the R menu image such that depths of the at least one of the icon and text item is different between the L menu image and the R menu image.

The display device may be one of a television and a monitor.

Another aspect of the present invention may provide a content reproducing apparatus include:
a display device to display a content image; and
a reproduction device to output first guide information, which notifies a support capability of the display device to the display device if there is a first request from a user to view the content image, confirm the first request based on the guide information and output the content image to the display device.

The content reproducing apparatus may further include a receiver to provide the content image to the display device, wherein the reproduction device may output second guide information, which notifies a support capability of the receiver, to the display device if there is a second request from the user to reproduce the content image, confirm the second request based on the guide information and output the content image to the receiver.

Another aspect of the present invention may provide a control method of a content reproducing apparatus in which a display device displays a menu image related to a content provided from a reproduction device, the method including: determining whether the display device is capable of displaying the menu image; and outputting a new menu image, which is supported by the display device, to the display device based on the menu image if the display device is not capable of displaying the menu image.

The determining whether the display device is capable of displaying the menu image may be based on extended display identification data (EDID) of the display device.

The outputting of the new menu image may include the reproduction device generating a three-dimensional (3D) menu image based on a left (L) menu image and a right (R) menu image generated by copying a two-dimensional (2D) menu image.

The outputting of the new menu image may include the reproduction device generating a left (L) menu image and a right (R) menu image by copying a two-dimensional (2D) menu image, shifting the generated L menu image and R menu image in an X-axis direction, respectively, and generating a three-dimensional (3D) menu image based on the X-shifted L menu image and the X-shifted R menu image.

The outputting of the new menu image may include: the reproduction device providing a left (L) menu image generated by copying a two-dimensional (2D) menu image and L menu image depth information about each pixel of the L menu image to the display device; and the display device reconstructing a right (R) menu image based on the L menu image and the L menu image depth information and generating a three-dimensional (3D) menu image based on the L menu image and the R menu image.

The control method L menu image depth information may include an X coordinate and a Y coordinate of each pixel of the L menu image, and wherein the outputting of the new menu image may further include the display device setting X and Y coordinates with respect to at least one of an icon and a text item of the L menu image and the R menu image such that depths of the at least one of the icon and the text item is different between the L menu image and the R menu image.

Another aspect of the present invention may provide a control method of a content reproducing apparatus in which a display device displays a content image provided from a reproduction device, the method including: determining whether the display device is capable of displaying the content image, if there is a request from a user to view the content image; and providing guide information to notify a support capability of the display device to the display device based on the determining of whether the display device is capable of displaying the content image.

The control method may further include confirming an intention of the user based on the guide information and outputting the content image to the display device.

The control method may further include returning to a mode prior to the user's selection if there is no input from the user for a predetermined time and if the display device does not support the content image.

The control method may further include: providing guide information to notify a support capability of a receiver if there is a request from the user to reproduce the content image, wherein the receiver is connected between the display device and the reproduction device; confirming an intention of the user based on the guide information; and outputting the content image to the receiver.

The control method may further include returning to a mode prior to the user's selection if there is no input from the user for a predetermined time and if the receiver does not support the content image.

### BRIEF DESCRIPTION OF THE DRAWINGS

These and/or other aspects of the invention will become apparent and more readily appreciated from the following description of the exemplary embodiments, taken in conjunction with the accompanying drawings of which:
FIG. 1 is a block diagram of a content reproducing apparatus according to one exemplary embodiment of the present invention;
FIG. 2 is a block diagram of a content reproducing apparatus according to another exemplary embodiment of the present invention;
FIG. 3 is a detailed block diagram of a reproduction device, examples of which are shown in each of FIGS. 1 and 2;
FIG. 4 is a view illustrating the principle of creation of a 3D image according to one exemplary embodiment of the present invention;
FIG. 5 is a view illustrating the principle of creation of a 3D image according to another exemplary embodiment of the present invention;
FIG. 6 is a view illustrating the 3D image creation principle, an example of which is shown in FIG. 5;
FIG. 7 is a view illustrating the principle of creation of a 3D image according to another exemplary embodiment of the present invention;
FIG. 8 is a flow chart illustrating a control method of a content reproducing apparatus according to one exemplary embodiment of the present invention;
FIG. 9 is a view illustrating a process to reconfirm the user's intention of requesting viewing of a 3D image when a reproduction device of a content reproducing apparatus is directly connected to a television, according to one exemplary embodiment of the present invention;
FIG. 10 is a flow chart illustrating a control method of the content reproducing apparatus based on the process of FIG. 9;
FIG. 11 is a view illustrating a process to reconfirm the user's intention of requesting reproduction of a 3D image when a reproduction device of a content reproducing apparatus is connected to a television via a receiver, according to one exemplary embodiment of the present invention; and
FIG. 12 is a flow chart illustrating a control method of the content reproducing apparatus based on the process of FIG. 11.

### DETAILED DESCRIPTION

Reference will now be made in detail to the exemplary embodiments of the present invention, examples of which are illustrated in the accompanying drawings, wherein like reference numerals refer to like elements throughout.

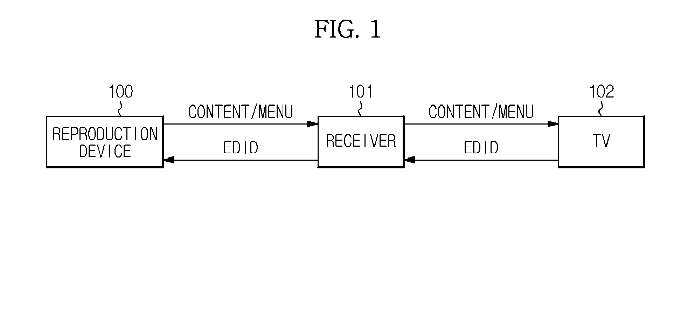

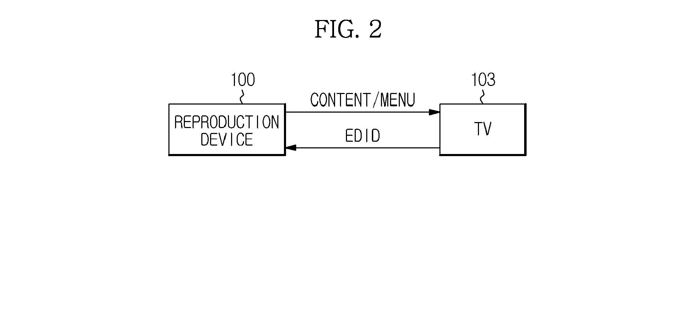

FIG. 1 is a block diagram of a content reproducing apparatus according to one exemplary embodiment of the present invention, and FIG. 2 is a block diagram of a content reproducing apparatus according to another exemplary embodiment of the present invention.

As shown in FIG. 1, a reproduction device 100 may be connected to a display device 102 via a receiver 101. Here, although the display device 102 has been described for illustrative purposes to be a television (TV) capable of displaying a 3D image, it is not limited thereto. For example, a monitor that supports display of a 3D image may be applied to the display device 102.

The reproduction device 100 provides content stored on a recording medium to the television 102 through the receiver 101. At this time, a high-definition multimedia interface (HDMI) may be used to transfer data between the devices. The HDMI is an interface for digital devices capable of transmitting both a video signal and an audio signal.

The television 102 may store extended display identification data (EDID) about a support capability thereof in an internal memory thereof and transmit the stored EDID to the receiver 101. The EDID may include a header, a manufacturer identification code, a product identification code, a manufacture date, an EDID structure, display information including basic display parameters, a maximum resolution, color characteristics, timing information, 2D or 3D content supportability/nonsupportability, etc., and a check-sum byte for error detection.

The receiver 101 may store the EDID transmitted from the television 102 in an internal memory thereof, as well as EDID thereof, and transmit the stored EDID to the reproduction device 100.

When there is a request from the user to view a menu image, the reproduction device 100 transmits the menu image to the television 102 through the receiver 101 in response to the user's request.

As shown in FIG. 2, the reproduction device 100 may be directly connected to a display device 103. Here, although the display device 103 has been described for illustrative purposes to be a television (TV) capable of selectively displaying a 2D image or 3D image, it is not limited thereto. For example, a monitor that supports selective display of a 2D image or 3D image may be applied to the display device 103.

The reproduction device 100 may transmit 2D or 3D content stored on a recording medium to the television 103 and transmit a menu image to the television 103 in response to the user's request. At this time, an HDMI may be used to transfer data between the devices.

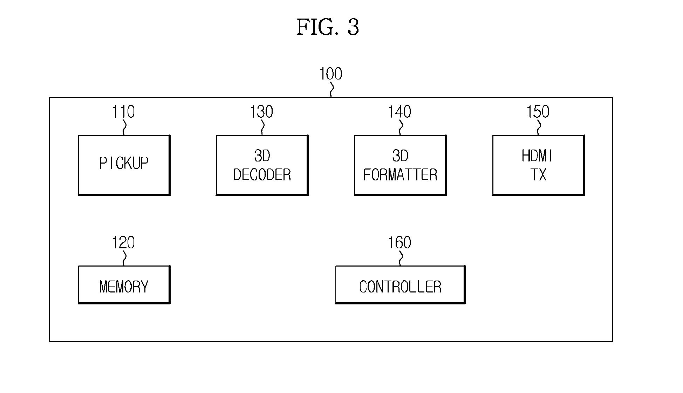

In FIG. 3, the reproduction device 100 includes a pickup 110, a memory 120, a 3D decoder 130, a 3D formatter 140, an HDMI transmitter (HDMI TX) 150, and a controller 160. The pickup 110 reads content stored on an optical disc capable of storing high-capacity data thereon, such as a digital video disc (DVD) or a blu-ray disc (BD).

The memory 120 stores information necessary for use of a content, which includes menu information associated with the content. The menu information may be provided in the form of icons of various shapes, as well as text that notify the user of information. These icons may include icons to search content information, and icons to edit the content. The memory 120 may be implemented with a flash memory.

The 3D decoder 130 decodes the content read by the pickup 110. In the case where the read content is a 3D content created in the form of a 3D image, the 3D decoder 130 decodes a left (L) image and a right (R) image captured at different angles by a plurality of cameras, respectively.

The 3D formatter 140 converts the formats of the decoded L image and R image into a 3D format. At this time, the 3D formatter 140 performs the format conversion using frame packing. Here, it should be noted that the format conversion scheme is not limited to frame packing and any other scheme may be used as long as it can perform the 3D format conversion.

The HDMI transmitter 150 outputs a 3D image of the 3D format converted by various 3D format conversion schemes including frame packing to the receiver 101. Then, in FIG. 1, the receiver 101 transmits the 3D image to the television 102 for display.

Alternatively, as shown in FIG. 2, the HDMI transmitter 150 may directly output the 3D image to the television 103.

For provision of the menu information in the memory 120 responsive to the user's request, the controller 160 controls an operation to generate and output a 3D menu image based on a 2D menu image in order to prevent screen flickering from occurring due to a change in image format. For example, in the case where the menu information is information created in the form of a 2D image and there is a menu output request from the user under the condition that a 3D image is reproduced or viewed, the controller 160 may not output the 2D menu image directly, but convert the 2D menu image into a 3D image and output the converted 3D image.

Hereinafter, a description will be given of exemplary embodiments that convert a 2D menu image into a 3D image.

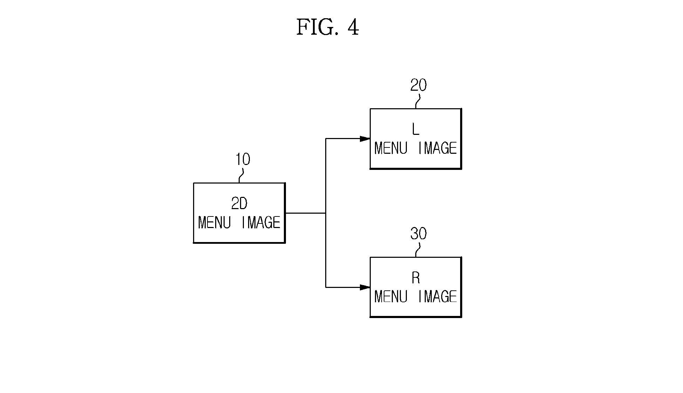

First, as shown in FIG. 4, a plurality of images 20 and 30, that are the same as a 2D menu image 10 read from the memory 120, are generated by copying the 2D menu image 10. One of the generated images is set to an L menu image 20 and another one thereof is set to an R menu image 30. Then, the 3D decoder 130 decodes the L menu image 20 and the R menu image 30, respectively, and the 3D formatter 140 converts the formats of the decoded L menu image 20 and R menu image 30 into a 3D format using various 3D format conversion schemes including frame packing, and outputs a 3D menu image of the 3D format through the HDMI transmitter 150. As a result, the television 102 or 103 displays the 3D menu image. Here, the 3D menu image has no depth.

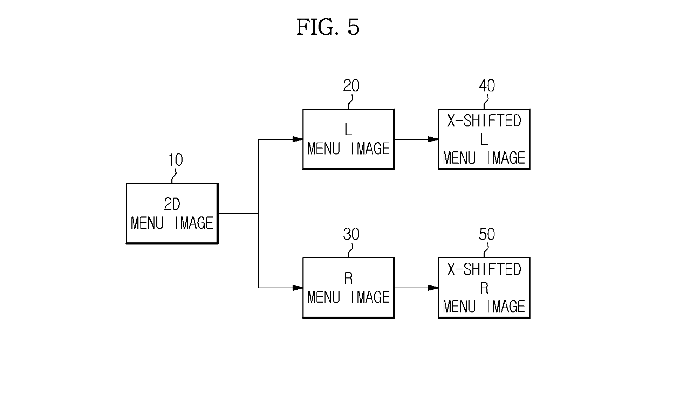

In another exemplary embodiment, as shown in FIG. 5, a plurality of images 20 and 30 that are the same as a 2D menu image 10 read from the memory 120 are generated by copying the 2D menu image 10, and an X-shifted L menu image 40 and an X-shifted R menu image 50 are generated by shifting the images 20 and 30 in an X-axis direction, respectively.

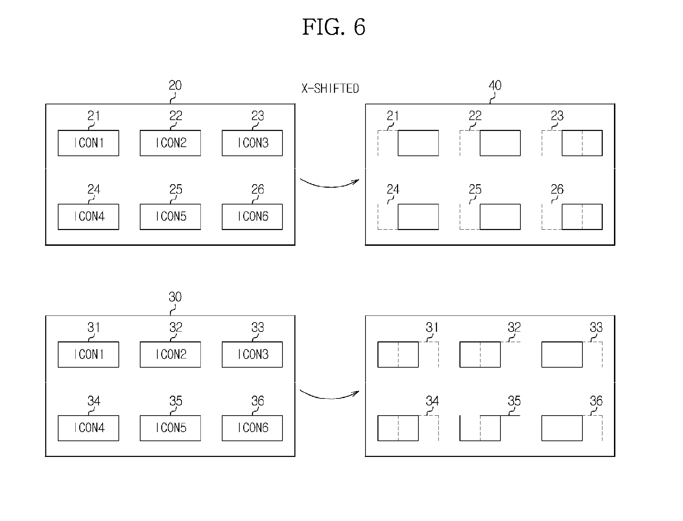

In FIG. 6, the L menu image 20 generated by copying the 2D menu image 10 includes six menu icons 21, 22, 23, 24, 25 and 26, and the R menu image 30 generated by copying the 2D menu image 10 includes six menu icons 31, 32, 33, 34, 35 and 36, too. Here, the six menu icons 21, 22, 23, 24, 25 and 26 of the L menu image 20 are substantially the same as the six menu icons 31, 32, 33, 34, 35 and 36 of the R menu image 30.

The X-shifted L menu image 40 is generated by shifting the six menu icons 21, 22, 23, 24, 25 and 26 of the L menu image 20 toward one side of the X-axis direction, and the X-shifted R menu image 50 is generated by shifting the six menu icons 31, 32, 33, 34, 35 and 36 of the R menu image 30 toward the other side of the X-axis direction. A stereoscopic image having a depth may be displayed by alternately displaying the X-shifted L menu image 40 and the X-shifted R menu image 50. Here, the user may present the amount that the menu icons will be shifted in the X-axis direction. Although the icons have been described for illustrative purposes to be shifted in the X-axis direction in the present exemplary embodiment, it should be noted that text may be shifted in the X-axis direction to obtain an X-shifted image.

The 3D decoder 130 decodes the X-shifted L menu image 40 and the X-shifted R menu image 50, respectively, and provides the decoded X-shifted L menu image 40 and X-shifted R menu image 50 to the 3D formatter 140. The 3D formatter 140 converts the formats of the decoded X-shifted L menu image 40 and X-shifted R menu image 50 into a 3D format using various 3D format conversion schemes including frame packing and outputs a 3D menu image of the 3D format through the HDMI transmitter 150. As a result, the television 102 or 103 displays the 3D menu image. Here, the X-shifted L menu image 40 and the X-shifted R menu image 50 have depths, differently from the 3D menu image described in FIG. 4, so that the user may feel a cubic effect of the menu image while watching the television 102 or 103.

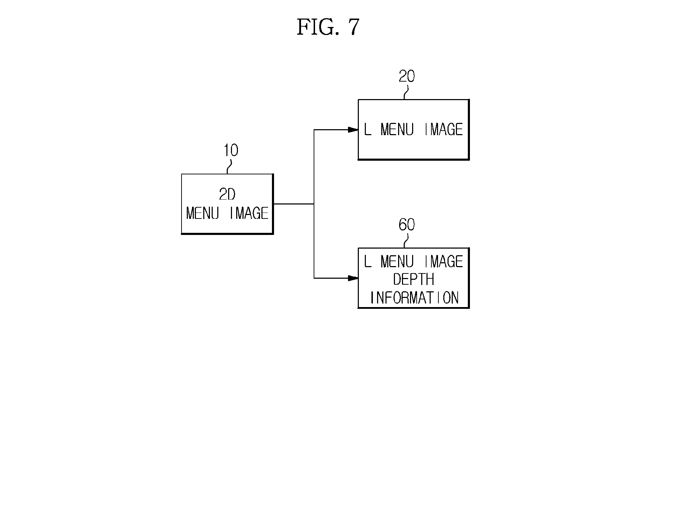

In another exemplary embodiment, as shown in FIG. 7, an L menu image 20 that is the same as a 2D menu image 10 read from the memory 120 is generated by copying the 2D menu image 10, and L menu image depth information 60 including depth information of each pixel of the L menu image 20 is outputted. The L menu image depth information 60 is prestored in the memory 120. The depth information of each pixel may be expressed in an X coordinate and a Y coordinate (X,Y). The L menu image 20 and the L menu image depth information 60 are outputted through the HDMI transmitter 150.

After receiving the L menu image 20 and the L menu image depth information 60, the television 102 or 103 may reconstruct an R menu image using the L menu image 20 and the L menu image depth information 60. The reconstructed R menu image may include icons of X and Y coordinates different from those of icons of the L menu image. As a result, using the L menu image depth information 60, the television 102 or 103 may make the depths of the respective icons of the L menu image different and also make the depths of the respective icons of the reconstructed R menu image different. Then, the television 102 or 103 may decode the L menu image 20 and the reconstructed R menu image, respectively, convert the formats of the decoded L menu image 20 and reconstructed R menu image into a 3D format to generate a 3D menu image of the 3D format, and display the 3D menu image.

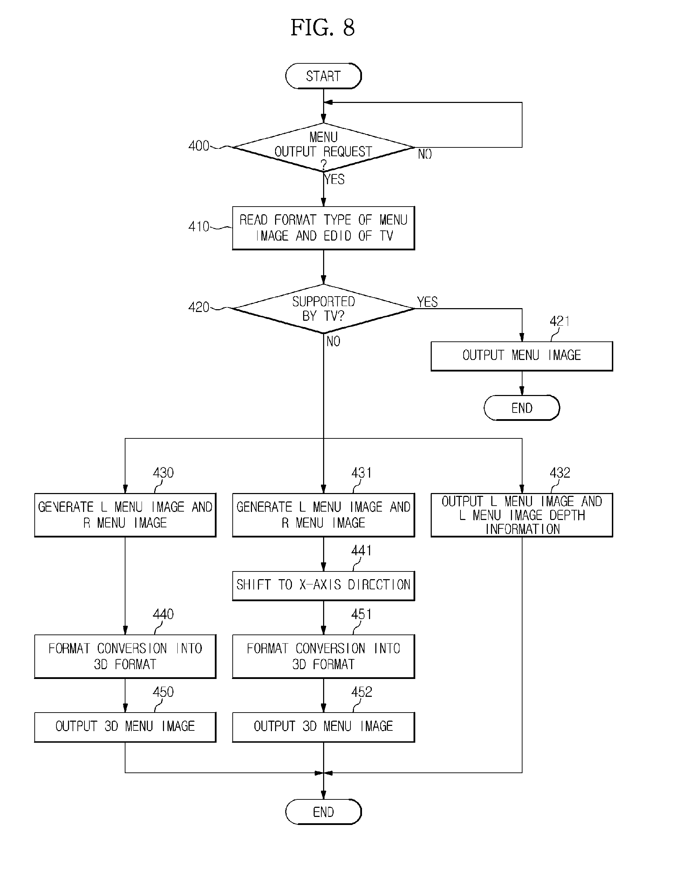

FIG. 8 is a flow chart illustrating a control method of a content reproducing apparatus according to one exemplary embodiment of the present invention.

The television 102 or 103 may display a 3D content provided from the reproduction device 100, so that the user may view the displayed 3D content. At this time, the controller 160 of the reproduction device 100 determines whether there is a menu output request from the user (400).

When a menu output request is present (YES of 400), the controller 160 reads a format type of a menu image stored in the memory 120 and reads EDID stored in the internal memory of the television 102 or 103 through the receiver 102 or directly (410).

In the case where the television 102 or 103 supports the format type of the menu image stored in the memory 120 (YES of 420), a 2D menu image is outputted through the HDMI transmitter 150 of the reproduction device 100 (421).

In the case where the television 102 or 103 does not support the format type of the menu image stored in the memory 120 (NO of 420), a 3D menu image is generated using a 2D menu image. In one method to generate a 3D menu image using a 2D menu image, an L menu image 20 and an R menu image 30 are generated by copying a 2D menu image 10, as shown in FIG. 4 (430). Then, the 3D decoder 130 decodes the L menu image 20 and the R menu image 30, respectively, and provides the decoded L menu image 20 and R menu image 30 to the 3D formatter 140, and the 3D formatter 140 converts the formats of the decoded L menu image 20 and R menu image 30 into a 3D format (440). Thereafter, the HDMI transmitter 150 outputs a 3D menu image of the 3D format (450). As a result, the television 102 or 103 displays the 3D menu image of the same format type as that of the 3D content. At this time, there is no change in image format.

In another method to generate a 3D menu image using a 2D menu image, an L menu image 20 and an R menu image 30 are generated by copying a 2D menu image 10, as shown in FIG. 5 (431).

An X-shifted L menu image 40 and an X-shifted R menu image 50 are generated by shifting the L menu image 20 and the R menu image 30 in an X-axis direction, respectively. For example, as shown in FIG. 6, the X-shifted L menu image 40 may be generated by shifting six menu icons 21, 22, 23, 24, 25 and 26 of the L menu image 20 toward one side of the X-axis direction, and the X-shifted R menu image 50 may be generated by shifting six menu icons 31, 32, 33, 34, 35 and 36 of the R menu image 30 toward the other side of the X-axis direction (441).

Then, the 3D decoder 130 decodes the X-shifted L menu image 40 and the X-shifted R menu image 50, respectively, and provides the decoded X-shifted L menu image 40 and X-shifted R menu image 50 to the 3D formatter 140, and the 3D formatter 140 converts the formats of the decoded X-shifted L menu image 40 and X-shifted R menu image 50 into a 3D format (451). Thereafter, the HDMI transmitter 150 outputs a 3D menu image of the 3D format (452). As a result, the television 102 or 103 displays the 3D menu image of the same format type as that of the 3D content. At this time, there is no change in image format.

In another method to generate a 3D menu image using a 2D menu image, an L menu image 20 generated by copying a 2D menu image 10, and L menu image depth information 60 are outputted, as shown in FIG. 7 (432). Then, the television 102 or 103 reconstructs an R menu image using the L menu image 20 and the L menu image depth information 60 and generates a 3D menu image using the L menu image 20 and the reconstructed R menu image. As a result, the television 102 or 103 displays the 3D menu image of the same format type as that of the 3D content. Even at this time, there is no change in image format.

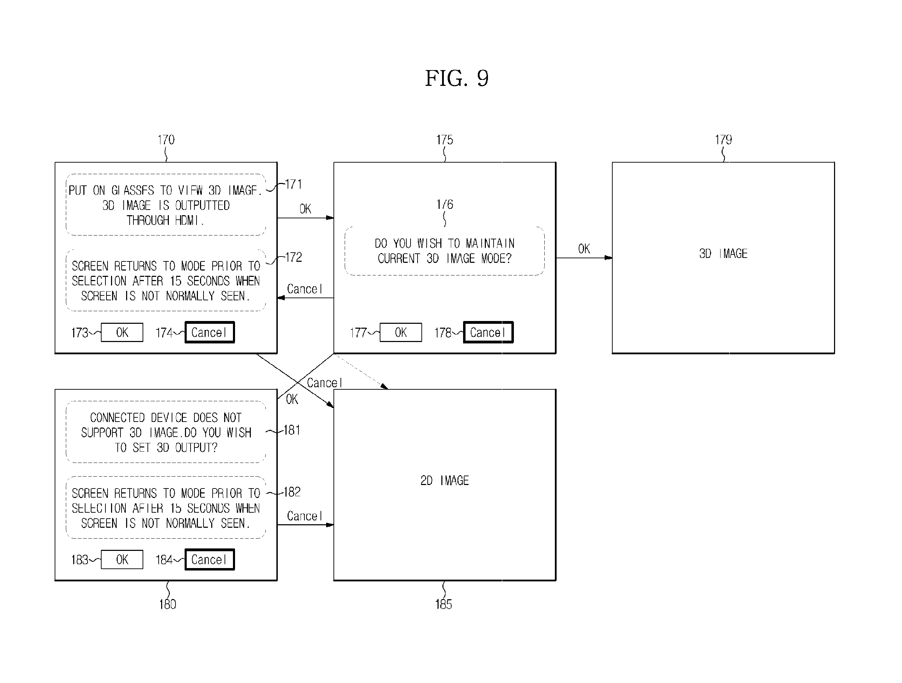

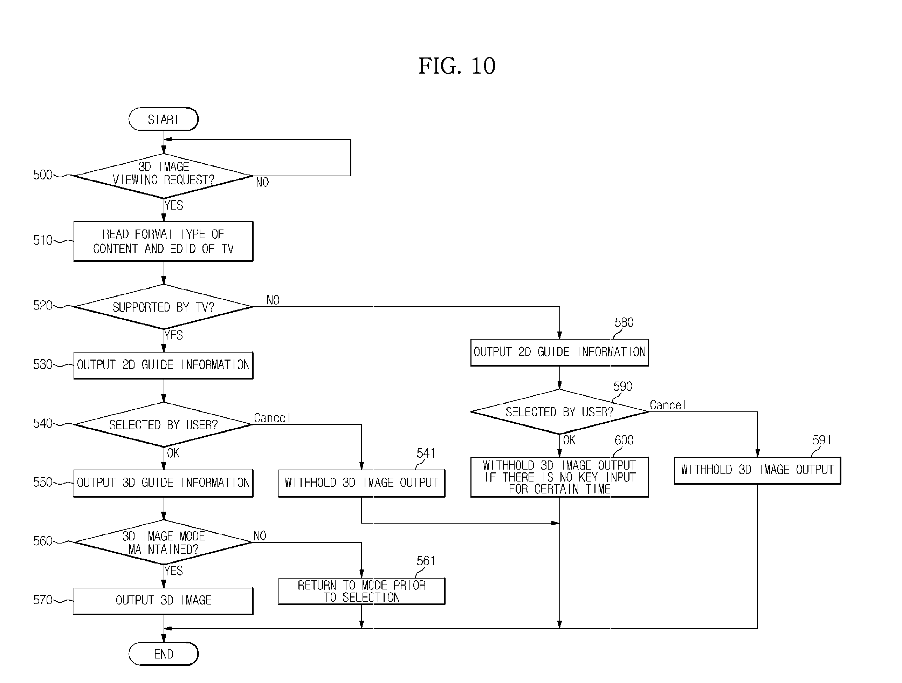

FIG. 9 is a view illustrating a process to reconfirm the user's intention of requesting viewing of a 3D image when a reproduction device of a content reproducing apparatus is directly connected to a television, according to one exemplary embodiment of the present invention, and FIG. 10 is a flow chart illustrating a control method of the content reproducing apparatus based on the process of FIG. 9.

Referring to FIG. 2, when the reproduction device 100 is directly connected to the television 103, the television 103 may have a different content support capability. That is, the television 103 may display only a 2D image or both a 2D image and a 3D image. Provided that the user knows the support capability of the television 103 thoroughly, he/she will make no inappropriate request to reproduce or view content unavailable in the television 103. However, because it is difficult for the user to know all support capabilities of many kinds of televisions thoroughly, there is a need to provide guide information to the user to prevent the user from requesting viewing of an inappropriate content.

In the case where the television 103 can support both a 2D image and a 3D image and there is a request from the user to view a 3D image (YES of 500), the reproduction device 100 reads a format type of a content to be viewed and EDID of the television 103 and outputs 2D guide information to the television 103 based on the support capability of the television 103 (510, 520, 530 and 580). For example, the television 103 may display guide information in first and second guide information areas 171 and 172 of a 2D screen 170, as shown in FIG. 9.

Displayed in the first guide information area 171 are information to invite the user to put on glasses to view a 3D image, and information to notify the user that the 3D image is outputted through an HDMI. The information to be displayed in the first guide information area 171 is set based on the EDID of the television 103.

If the television 103 has previously displayed a 2D image and a Cancel button 174 of the 2D screen 170 is selected by the user (540), the television 103 recognizes that the user has no intention of viewing a 3D image, and then withholds output of a 3D image and displays the 2D image on a 2D screen 185 (541).

When an OK button 173 is selected by the user (540), the reproduction device 100 outputs 3D guide information to the television 103 (550). Then, the television 103 displays guide information to reconfirm the user's intention in a third guide information area 176 of a 3D screen 175. That is, the television 103 confirms whether the user has an intention of displaying a 3D image. Alternatively, provided that the user wishes to reproduce a 3D content as a 2D image, he/she may select a button corresponding to the 2D image and view the 2D image by directly using an L or R frame of a 3D content image or both of them. When an OK button 177 is selected by the user (YES of 560), the reproduction device 100 outputs a 3D image, and the television 103 displays the 3D image outputted from the reproduction device 100 on a 3D screen 179 (570).

If a Cancel button 178 of the 3D screen 175 is selected (NO of 560), the television 103 recognizes that the user has no intention of viewing a 3D image, and then returns to the 2D screen 170 (561).

An error may be present in the EDID of the television 103, and a request from the user may be inputted based on wrong information resulting from the error displayed in the first guide information area 171. In consideration of this, displayed in the second guide information area 172 is guide information to notify the user that the screen of the television 103 returns to a mode prior to the user's selection after a certain wait time when the screen is not normally seen. For example, in the case where the OK button 173 has been selected by the user, but the television 103 does not support a 3D image, the television 103 may enter a state in which it cannot normally provide the 3D screen 175, and display the 2D screen 170 after the state lasts for a certain time, for example, 15 seconds.

The television 103 may support only a 2D image. In this case (NO of 520), the reproduction device 100 outputs, to the television 103, 2D information appropriate to the support capability of the television 103 that does not support a 3D image (580). The television 103 displays guide information in fourth and fifth guide information areas 181 and 182 of a 2D screen 180, as shown in FIG. 9. Displayed in the fourth guide information area 181 is information to notify the user that the television 103 does not support a 3D image. Displayed in the fifth guide information area 182 is guide information to consider the case where the screen of the television 103 is not normally seen due to an inappropriate selection by the user.

If the television 103 has previously displayed a 2D image and a Cancel button 184 of the 2D screen 180 is selected by the user (590), the television 103 recognizes that the user has no intention of viewing a 3D image, and then withholds output of a 3D image and displays the 2D image on the 2D screen 185 (591).

If the television 103 has previously displayed a 2D image and an OK button 183 of the 2D screen 180 is selected by the user (590), the 3D screen 175 is not normally displayed because the user has set 3D output even though he/she has been notified of the information that the television 103 does not support a 3D image. In this case, after the lapse of a certain time, for example, 15 seconds, the reproduction device 100 withholds output of a 3D image, and the television 103 displays the previous 2D image on the 2D screen 185 (600).

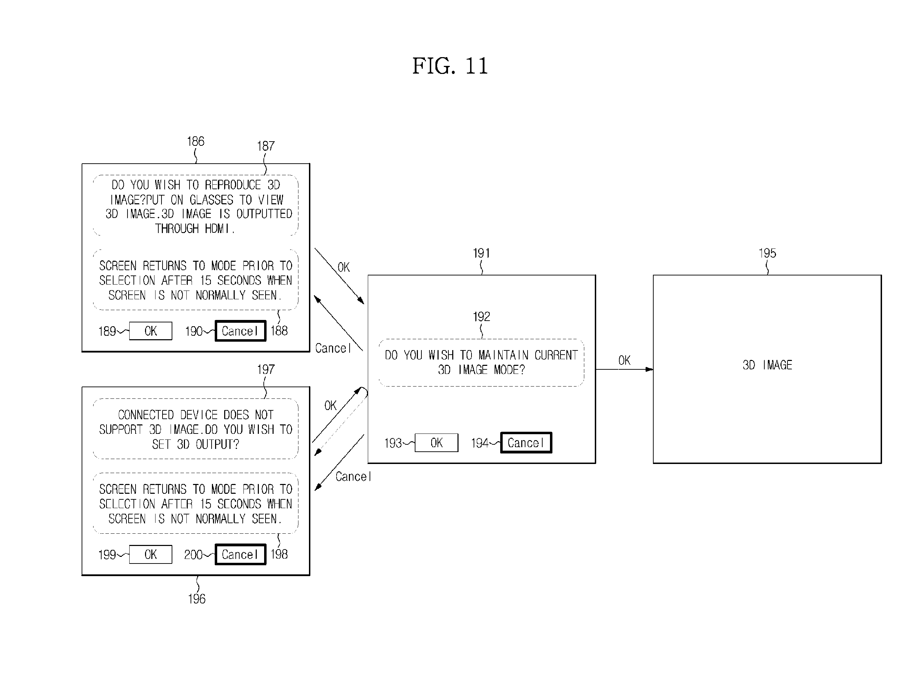

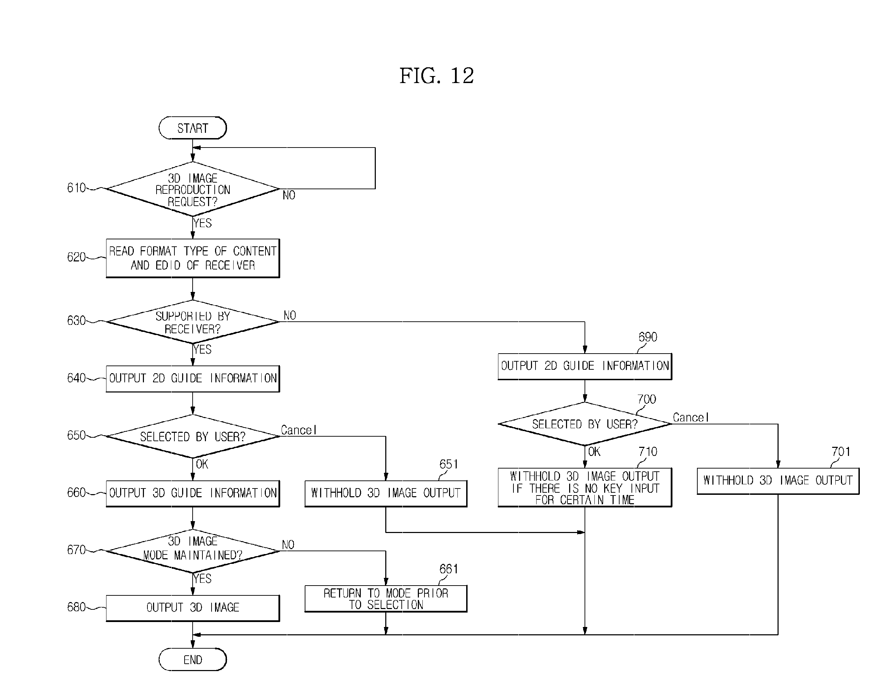

FIG. 11 is a view illustrating a process to reconfirm the user's intention of requesting reproduction of a 3D image when a reproduction device of a content reproducing apparatus is connected to a television via a receiver, according to one exemplary embodiment of the present invention, and FIG. 12 is a flow chart illustrating a control method of the content reproducing apparatus based on the process of FIG. 11.

Referring to FIG. 1, in order to display a 3D image reproduced by the reproduction device 100 on the television 102, both the television 102 and receiver 101 must support the 3D image.

The receiver 101 may not support a 3D image. That is, provided that the receiver 101 has only an output port to output an analog signal, it cannot output a 3D image with the output port. As a result, the television 102 cannot normally display a 3D image. There is a need to notify the user of guide information related to whether the receiver 101 supports a 3D image, so as to enable the user to make an appropriate selection.

In the case where the television 102 supports a 3D image and there is a request from the user to reproduce a 3D image (YES of 610), the reproduction device 100 reads a format type of a content to be reproduced and EDID of the receiver 101 and outputs 2D guide information to the television 102 based on the support capability of the receiver 101 (620, 630, 640 and 690). For example, the television 102 may display guide information in sixth and seventh guide information areas 187 and 188 of a 2D screen 186, as shown in FIG. 11.

Displayed in the sixth guide information area 187 are information to invite the user to put on glasses to view a 3D image, and information to notify the user that the 3D image is outputted through an HDMI. The information to be displayed in the sixth guide information area 187 is set based on the EDID of the receiver 101.

If a Cancel button 190 at a lower end portion of the 2D screen 186 is selected by the user (650), the reproduction device 100 recognizes that the user has no intention of reproducing a 3D image, and then withholds output of a 3D image and ends the process (651).

When an OK button 189 at a lower end portion of the 2D screen 186 is selected by the user (650), the reproduction device 100 outputs 3D guide information and transfers the 3D guide information to the television 102 through the receiver 101 (660). Then, the television 102 displays guide information to reconfirm the user's intention in an eighth guide information area 192 of a 3D screen 191. That is, the television 102 confirms whether the user has an intention of displaying a 3D image. When an OK button 193 is selected by the user (YES of 670), the reproduction device 100 outputs a 3D image to the receiver 101 (680). The television 102 displays the 3D image provided through the receiver 101 on a 3D screen 195.

If a Cancel button 194 of the 3D screen 191 is selected (NO of 670), the television 102 returns to the 2D screen 186, which is a mode prior to the user's selection (661) .

An error may be present in the EDID of the receiver 101, and a request from the user may be inputted based on wrong information resulting from the error displayed in the sixth guide information area 187. In consideration of this, displayed in the seventh guide information area 188 is guide information to notify the user that the screen of the television 102 returns to a mode prior to the user's selection after a certain wait time when the screen is not normally seen. For example, in the case where the OK button 189 has been selected by the user, but the receiver 101 does not support a 3D image, the television 102 may enter a state in which it cannot normally provide the 3D screen 191, and display the 2D screen 186 after the state lasts for a certain time, for example, 15 seconds.

The receiver 101 may support only a 2D image. In this case (NO of 630), the reproduction device 100 outputs 2D information appropriate to the support capability of the receiver 101 that does not support a 3D image (690). The television 102 displays guide information in ninth and tenth guide information areas 197 and 198 of a 2D screen 196, as shown in FIG. 11. Displayed in the ninth guide information area 197 is information to notify the user that the receiver 101 does not support a 3D image. Displayed in the tenth guide information area 198 is guide information to consider the case where the screen of the television 102 is not normally seen due to an inappropriate selection by the user.

If a Cancel button 200 of the 2D screen 196 is selected by the user (700), the reproduction device 100 recognizes that the user has no intention of reproducing a 3D image, and then withholds output of a 3D image and ends the process (701).

If an OK button 199 at a lower end portion of the 2D screen 196 is selected by the user (700), the 3D screen 191 is not normally displayed because the user has set 3D output even though he/she has been notified of the information that the connected device, or receiver 101, does not support a 3D image. In this case, if there is no key input for a certain time, for example, 15 seconds, the reproduction device 100 withholds output of a 3D image, and the television 102 displays the 2D screen 196 (710).

As is apparent from the above description, in a content reproducing apparatus and a control method thereof according to exemplary embodiments of the present invention, screen flickering may be prevented when a menu image provided from a reproduction device is displayed on a display device. Also, guide information about a support capability of the display device is notified to the user and a content image is outputted after user confirmation. Therefore, a content may be readily used.

Although a few exemplary embodiments of the present invention have been shown and described, it would be appreciated by those skilled in the art that changes may be made in these exemplary embodiments without departing from the principles and spirit of the invention, the scope of which is defined in the claims and their equivalents.

## Claims

1. A content reproducing apparatus comprising:
a display device to display a menu image related to content; and
a reproduction device to output a new menu image supported by the display device when the menu image cannot be displayed by the display device.

2. The content reproducing apparatus according to claim 1, further comprising a receiver connected between the display device and the reproduction device,
wherein the reproduction device provides the new menu image to the display device through the receiver.

3. The content reproducing apparatus according to claim 2, wherein, if the display device is capable of displaying three-dimensional (3D) images and a request from a user to output the menu image is received, the reproduction device generates a 3D menu image using a two-dimensional (2D) menu image and outputs the generated 3D menu image to the display device.

4. The content reproducing apparatus according to claim 3, wherein the reproduction device comprises:
a memory to store the 2D menu image; and
a controller to control an operation to generate the 3D menu image from the 2D menu image.

5. The content reproducing apparatus according to claim 1, wherein the display device displays a content image, and
wherein the reproduction device outputs first guide information, which notifies a support capability of the display device to the display device if there is a request from a user to view the content image, confirms the first request based on the guide information and outputs the content image to the display device.

6. The content reproducing apparatus according to claim 5, further comprising a receiver to provide the content image to the display device,
wherein the reproduction device outputs second guide information, which notifies a support capability of the receiver to the display device if there is a second request from the user to reproduce the content image, confirms the second request based on the guide information and outputs the content image to the receiver.

7. A control method of a content reproducing apparatus in which a display device displays a menu image related to a content provided from a reproduction device, the method comprising:
determining whether the display device is capable of displaying the menu image; and
outputting a new menu image, which is supported by the display device to the display device based on the menu image if the display device is not capable of displaying the menu image.

8. The control method according to claim 7, wherein the determining whether the display device is capable of displaying the menu image is based on extended display identification data (EDID) of the display device.

9. The control method according to claim 7, wherein the outputting of the mew menu image comprises the reproduction device generating a three-dimensional(3D) menu image based on a left(L) menu image and an a right(R) menu image generated by copying a two-dimensional(2D) menu image.

10. The control method according to claim 7, wherein the outputting of the mew menu image comprises the reproduction device generating an a left(L) menu image and a right(R) menu image by copying a two-dimensional(2D) menu image, shifting the generated L menu image and R menu image in an X-axis direction, respectively, and generating a three-dimensional(3D) menu image based on the X-shifted L menu image and the X-shifted R menu image.

11. The control method according to claim 7, wherein the outputting of the mew menu image comprises:
the reproduction device providing a left(L) menu image generated by copying a two-dimensional(2D) menu image and L menu image depth information about each pixel of the L menu image to the display device; and
the display device reconstructing a right(R) menu image based on the L menu image and the L menu image depth information and generating a three-dimensional(3D) menu image based on the L menu image and the R menu image.

12. The control method according to claim 11, wherein the L menu image depth information includes an X coordinate and a Y coordinate of each pixel of the L menu image, and
wherein the outputting of the new menu image further comprises the display device setting X and Y coordinates with respect to at least one of an icon and a text item of the L menu image and the R menu image such that depths of the at least one of an icon and a text item is different between the L menu image and the R menu image.

13. The control method according to claim 7, further comprising:
determining whether the display device is capable of displaying a content image provided from the reproduction device, if there is a request from a user to view the content image; and
providing guide information to notify a support capability of the display device to the display device based on determining of whether the display device is capable of displaying the content image.

14. The control method according to claim 13, further comprising confirming an intention of the user based on the guide information, and outputting the content image to the display device.

15. The control method according to claim 14, further comprising returning to a mode prior to the user's selection if there is no input from the user for a predetermined time and if the display device does not support the content image.
